# EUROPEAN PATENT APPLICATION

(11) **EP 4 727 095 A1**
(43) Date of publication of application: **15.04.2026**
(21) Application number: 24818321.2
(22) Date of filing: 15.03.2024
(51) Int. Cl.: H04L 69/22

(54) **DATA PACKET PROCESSING METHOD AND APPARATUS, AND ELECTRONIC DEVICE**

(30) Priority: 09.06.2023 CN 202310687224
(71) Applicant: Datang Mobile Communications Equipment Co., Ltd., Beijing 100085 (CN)
(72) Inventor: GU, Xiaofei, Beijing 100085 (CN); SONG, Yaqin, Beijing 100085 (CN); HU, Weiqi, Beijing 100085 (CN); LI, Yun, Beijing 100085 (CN)
(74) Representative: Maiwald GmbH
(86) International application number: PCT/CN2024/081932
(87) International publication number: WO 2024/250784

(57) **Abstract**

This disclosure provides a data packet processing method and apparatus, and an electronic device, and relates to the field of communication technologies. The method includes: receiving a first data packet, wherein the first data packet comprises N layers of headers, and N is a positive integer; determining a first header, wherein the first header is a K-th layer header in the N layers of headers, K is a positive integer, and K < N; and parsing up to the first header when performing parsing processing on the headers of the first data packet.

## Description

### CROSS-REFERENCE TO RELATED APPLICATION

This application claims a priority to Chinese Patent Application No. 202310687224.3 entitled "Data Packet Processing Method and Apparatus, and Electronic Device" filed on June 9, 2023, disclosure of which is hereby incorporated by reference in its entirety.

### TECHNICAL FIELD

The present disclosure relates to the field of communication technologies, and in particular, to a data packet processing method and apparatus, and electronic device.

### BACKGROUND

Conventionally, a data packet parsing and processing mechanism is: when a data packet is received, start parsing the data packet, and strip the headers of the data packet one by one, that is, sequentially strip, e.g., Ethernet header, Internet Protocol (IP) header, Transmission Control Protocol (TCP) or User Datagram Protocol (UDP) header, Internet Control Message Protocol (ICMP) header, etc.; then modify some fields in the headers or perform other actions, and then re-encapsulate the headers before forwarding the data packet. This process has the following problem: when parsing and processing the data packet, headers of the data packet need to be parsed sequentially, but maybe only some of them will actually be modified. Nevertheless, the unmodified headers still have to be encapsulated one by one in sequence. This leads to an increase in the parsing delay and re-encapsulation delay of the data packet headers, thereby increasing the overall processing delay of the data packet.

### SUMMARY

The present disclosure provides a data packet processing method, apparatus, and electronic device, which can solve the problem of large delay in the conventional data packet processing method.

An embodiment of the present disclosure provides a data packet processing method performed by an electronic device, the method including:
receiving a first data packet, where the first data packet includes N layers of headers, and N is a positive integer;
determining a first header, where the first header is the K-th layer header in the N layers of headers, K is a positive integer, and K < N;
when performing parsing processing on the headers of the first data packet, parsing up to the first header.

In some embodiments, the first header is a header to be modified, or the first header is a preset header up to which a pre-parsing is to be performed.

In some embodiments, the N layers of headers are defined by a protocol, or the N layers of headers are determined based on pre-configuration.

In some embodiments, the parsing up to the first header when performing parsing processing on the headers of the first data packet includes:
performing the following steps on the first K layers of headers in the N layers of headers sequentially, starting from a first layer header of the N layers of headers:
determining a first field in an i-th layer header, where the first field is used for indicating an (i+1)-th layer header, i is a positive integer, and i ≤ K;
performing parsing processing on the (i+1)-th layer header according to the first field.

In some embodiments, the parsing up to the first header when performing parsing processing on the headers of the first data packet includes:
determining a second field in the first (K-1) layers of headers in the N layers of headers, where the second field is used for indicating the first header;
performing parsing processing on the first header according to the second field.

In some embodiments, after parsing up to the first header when performing parsing processing on the headers of the first data packet, the method further includes:
continuing to parse up to a second header when the second header is not included in parsed first K layers of headers in the N layers of headers, where the second header is a header to be modified.

In some embodiments, the continuing to parse up to a second header includes:
performing the following steps on last (N-K) layers of headers in the N layers of headers sequentially, starting from a (K+1)-th layer header of the N layers of headers:
determining a third field in a j-th layer header, where the third field is used for indicating a (j+1)-th layer header, j is a positive integer, and K+1 ≤ j ≤ N; and
performing parsing processing on the (j+1)-th layer header according to the third field.

In some embodiments, the continuing to parse up to a second header includes:
determining a fourth field in last (N-K) layers of headers in the N layers of headers, where the fourth field is used for indicating the second header; and
performing parsing processing on the second header according to the fourth field.

In some embodiments, the data packet processing method further includes:
receiving update information, where the update information is used for instructing updating of parsing configuration; and
updating a first parsing rule and/or a second parsing rule according to the update information; where the first parsing rule is a rule for performing parsing processing on the N layers of headers of the first data packet, and the second parsing rule is a rule for performing pre-parsing processing on first K layers of headers of the N layers of headers.

An embodiment of the present disclosure further provides a data packet processing apparatus, including a memory, a transceiver, and a processor,
wherein the memory is configured to store a computer program; the transceiver is configured to send and receive data under the control of the processor; the processor is configured to read the computer program in the memory and perform the following steps:
receiving a first data packet, where the first data packet includes N layers of headers, and N is a positive integer;
determining a first header, where the first header is a K-th layer header in the N layers of headers, K is a positive integer, and K < N;
parsing up to the first header when performing parsing processing on the headers of the first data packet.

In some embodiments, the first header is a header to be modified, or the first header is a preset header up to which a pre-parsing is to be performed.

In some embodiments, the N layers of headers are defined by a protocol, or the N layers of headers are determined based on pre-configuration.

In some embodiments, the processor is configured to read the computer program in the memory and perform the following steps:
performing the following steps on first K layers of headers in the N layers of headers sequentially, starting from a first layer header of the N layers of headers:
determining a first field in an i-th layer header, where the first field is used for indicating an (i+1)-th layer header, i is a positive integer, and i ≤ K; and
performing parsing processing on the (i+1)-th layer header according to the first field.

In some embodiments, the processor is configured to read the computer program in the memory and perform the following steps:
determining a second field in first (K-1) layers of headers in the N layers of headers, where the second field is used for indicating the first header; and
performing parsing processing on the first header according to the second field.

In some embodiments, the processor is configured to read the computer program in the memory and perform the following steps:
continuing to parse up to a second header when the second header is not included in parsed first K layers of headers in the N layers of headers, where the second header is a header to be modified.

In some embodiments, the processor is configured to read the computer program in the memory and perform the following steps:
performing the following steps on last (N-K) layers of headers in the N layers of headers sequentially, starting from a (K+1)-th layer header of the N layers of headers:
determining a third field in a j-th layer header, where the third field is used for indicating a (j+1)-th layer header, j is a positive integer, and K+1 ≤ j ≤ N; and
performing parsing processing on the (j+1)-th layer header according to the third field.

In some embodiments, the processor is configured to read the computer program in the memory and perform the following steps:
determining a fourth field in last (N-K) layers of headers in the N layers of headers, where the fourth field is used for indicating the second header; and
performing parsing processing on the second header according to the fourth field.

In some embodiments, the processor is configured to read the computer program in the memory and perform the following steps:
receiving update information, where the update information is used for instructing updating of parsing configuration; and
updating a first parsing rule and/or a second parsing rule according to the update information; where the first parsing rule is a rule for performing parsing processing on the N layers of headers of the first data packet, and the second parsing rule is a rule for performing pre-parsing processing on first K layers of headers of the N layers of headers.

An embodiment of the present disclosure further provides an electronic device, including:
a first receiving unit, configured to receive a first data packet, where the first data packet includes N layers of headers, and N is a positive integer;
a processing unit, configured to determine a first header, where the first header is a K-th layer header in the N layers of headers, K is a positive integer, and K < N;
a first parsing unit, configured to parse up to the first header when performing parsing processing on the headers of the first data packet.

An embodiment of the present disclosure further provides a processor-readable storage medium, where the processor-readable storage medium stores a computer program, and the computer program is configured to cause the processor to execute the steps of the data packet processing methods as described above.

The beneficial effects of the above technical solutions of the present disclosure are as follows.

In the embodiment of the present disclosure, for N layers of headers in a first data packet, the electronic device, when performing header parsing processing, only parses up to the header to be modified or the preset header up to which parsing is to be performed, and then modifies the parsed headers or performs other actions, thereby avoiding layer-by-layer parsing processing and layer-by-layer encapsulation processing of the N layers of headers during data forwarding, and reducing the parsing delay and re-encapsulation delay of the data packet headers, that is, reducing the overall processing delay of the data packet.

### BRIEF DESCRIPTION OF THE DRAWINGS

FIG. 1 shows a schematic diagram of a V1model abstract forwarding model defined in P4;
FIG. 2 shows a schematic diagram of a data packet parsing process;
FIG. 3 shows a flowchart of a data packet processing method according to an embodiment of the present disclosure;
FIG. 4 shows a schematic diagram of a data packet parsing process according to an embodiment of the present disclosure;
FIG. 5 shows a first schematic diagram of a P4 programmable operational processing mechanism according to an embodiment of the present disclosure;
FIG. 6 shows a second schematic diagram of a P4 programmable operational processing mechanism according to an embodiment of the present disclosure;
FIG. 7 shows a first block diagram of a data packet processing apparatus according to an embodiment of the present disclosure;
FIG. 8 shows a second block diagram of a data packet processing apparatus according to an embodiment of the present disclosure;
FIG. 9 shows a block diagram of an electronic device according to an embodiment of the present disclosure.

### DETAILED DESCRIPTION

To make the technical problems, technical solutions, and advantages to be solved by the present disclosure clearer, a detailed description will now be given in the following with reference to the accompanying drawings and specific embodiments. In the following description, specific details such as specific configurations and components are provided only to facilitate a comprehensive understanding of the embodiments of the present disclosure. Therefore, it should be clear to those skilled in the art that various changes and modifications can be made to the embodiments described herein without departing from the scope and spirit of the present disclosure. In addition, descriptions of well-known functions and constructions are omitted solely for clarity and conciseness.

It should be understood that the terms "one embodiment" or "an embodiment" mentioned throughout the specification means that a specific feature, structure, or characteristic related to the embodiment is included in at least one embodiment of the present disclosure. Therefore, the appearances of "in one embodiment" or "in an embodiment" in various places throughout the specification do not necessarily refer to the same embodiment. Furthermore, the specific features, structures, or characteristics can be combined in any suitable manner in one or more embodiments.

In various embodiments of the present disclosure, it should be understood that the sequence numbers of the following processes do not mean the order of execution, and the order of execution of individual processes should be determined by their functions and internal logics, rather than constituting any limitation on the implementation process of the embodiments of the present disclosure.

In addition, the terms "system" and "network" can often be used interchangeably in this document.

The technical solutions provided by the embodiments of the present disclosure can be applicable to various systems. For example, eligible systems may be Global System for Mobile Communications (GSM) system, Code Division Multiple Access (CDMA) system, Wideband Code Division Multiple Access (WCDMA) General Packet Radio Service (GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunication System (UMTS), Worldwide Interoperability for Microwave Access (WiMAX) system, 5G New Radio (NR) system, etc. These various systems all include terminal devices and network devices. The system can also include a core network part, such as an Evolved Packet System (EPS), a 5G System (5GS), a 6G system, etc.

Network devices and terminal devices can each use one or more antennas for Multiple Input Multiple Output (MIMO) transmission, and MIMO transmission can be Single User MIMO (SU-MIMO) or Multiple User MIMO (MU-MIMO). According to the form and number of antenna combinations, MIMO transmission can be 2Dimension MIMO (2D-MIMO), 3Dimension MIMO (3D-MIMO), Full Dimension MIMO (FD-MIMO) or massive MIMO (massive-MIMO), and can also be diversity transmission, precoding transmission, or beamforming transmission, etc.

In the embodiments of the present disclosure, the term "and/or" describes the association relationship between associated objects, indicating that there are potentially three relationships. For example, A and/or B can mean: A exists alone, A and B exist simultaneously, and B exists alone. The character "/" generally indicates that the associated objects are in an "or" relationship.

In the embodiments of the present disclosure, the term "multiple" refers to two or more, and other quantifiers are similar thereto.

Now, the technical solutions in the embodiments of the present disclosure will be clearly and completely described below in conjunction with the accompanying drawings in the embodiments of the present disclosure. Apparently, the described embodiments are merely part of the embodiments of the present disclosure, rather than all of them. Based on the embodiments in the present disclosure, all other embodiments obtained by those of ordinary skill in the art without making creative efforts shall fall within the protection scope of the present disclosure.

The following will describe the related technologies involved in the present disclosure:

### 1. The programming protocol-independent packet processors (P4);

The P4 technology has a P4₁₄ version and a P4₁₆ version, of which the P4₁₆ version is an improvement over the P4₁₄ version. P4₁₆ version consists of five parts as the following: header, parser, control ingress, table, and action.

### (1) Header:

The header defines the header fields of data packets processed in programmable devices. For example: the header is used for data storage, header parsing, and field matching. If a matching is successfully made, a defined action is executed, such as: modifying header fields, assigning values to header fields, etc. The headers may be categorized into packet header and metadata.

The packet header is used to describe the data packet structure, defining the names and lengths of various fields of a protocol. The packet header can not only define the lengths of the fields, but also assign values to them.

The metadata is used to carry data and configuration information. There are mainly two types of metadata: one is user-defined metadata, which can store user-defined values, temporary fields or the like, such as computational results from the header fields. The other type is inherent metadata used to display, e.g., port number of the switch and other self-configuration information.

### (2) Parser:

The P4 parser is a state machine with one start state and two final states. The start state is always named "start". The two final states are always named "accept" (indicating parsing success) and "reject" (indicating parsing failure). The start state is part of the parser, while the accept and reject states are unlike the states provided by the programmer, and are not logically beyond the parser.

### (3) Table:

The table mainly includes three parts: matching fields, specific actions, and table entries, defining the forwarding processing mechanism for data packets. The table is to be applied by the switch to the processing of data packets.

P4 supports multiple matching types, such as exact matching, ternary matching, longest prefix matching, etc.

The action domain (i.e., specific actions) is a description of the actions for data packet processing. Corresponding actions are executed according to the matching results, and the quantity of specific parameters executed in individual actions are different. However, only the action names are visible in the action domain, while the specific parameters executed are invisible.

The table capacity (i.e., table entries) limits the number of specific entries that a single table can accommodate.

### (4) Action:

Actions define parameters of the specific operation executed by the action domain. In P4 applications, corresponding actions are executed after successful matchings are made. The specific execution operations and variables defined in the action are composed of action primitives. P4 language is primarily categorized into Primitive Actions and Compound Actions. Primitive operations mainly include: discarding, adding and deleting a header, counting and metering, etc. Additionally, the user can customize compound actions composed of one or more primitive actions.

### (5) Control ingress:

The control ingress mainly defines predicate conditional statements and the tables to be called. The predicate condition determines the execution order of the tables, enabling the transition of the data packets between multiple tables. When a data packet enters the control ingress, it enters the table to execute parameter matching after fulfilling the predicate conditions. The procedure can be understood as a function call to the table.

### 2. The P4 operational parsing mechanism:

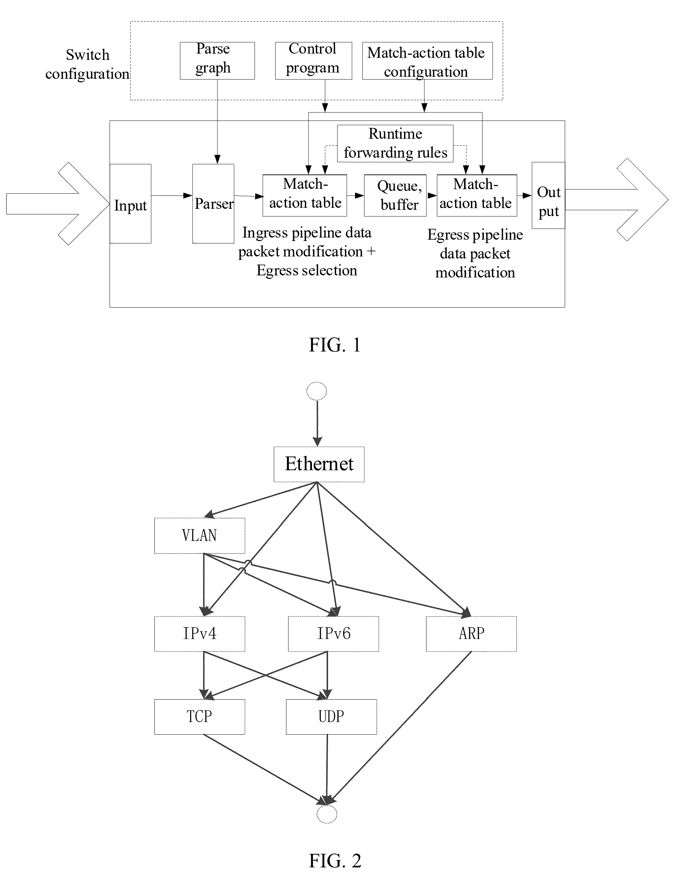

Abstract forwarding models primarily include Protocol-Independent Switch Architecture (PISA), Tofino Native Architecture (TNA) introduced by Barefoot, Virtual Model 1 (V1model), etc. FIG. 1 shows a schematic diagram of a V1model abstract forwarding model defined in P4.

### (1) Major operations of an abstract forwarding model:

The processing and forwarding logic of data packets faced by users can be described by its abstract forwarding model, which can use programmable chips to generalize the question of how to process messages on underlying hardware devices. The abstract forwarding model has two major operations: configure and populate.

The configure operation mainly defines the protocol to be implemented and the processing and forwarding logic for data packets. Using P4 technology, files generated are pushed to the programable devices to complete the definition of the analysis and processing logic of the programmable devices. By setting the five elements of P4 technology, network designers can customize the protocols, matching types, processing and forwarding mechanisms, and specific action execution parameters. These reflect the programmability in the user plane.

The populate operation serves to push table entries. The specific table is expanded or shrunk by the table entries pushed by the user. In the configure operation, the match-action table is specified for individual programmable devices, and the populate operation determines when to apply specific functions of a specific table to a data packet.

### (2) The data packet processing pipeline:

For arriving at the parser: when a programmable device receives a data packet, the packet will be parsed by the parser. If the header fields and data payload of the data packet are separated, the data part will not participate in the matching. The parser uses the match-action function to extract and parse the header of the data packet to determine the protocol supported by the programmable device. After parsing is completed, an analysis result is generated as the execution target for subsequent match and action.

For arriving at the match-action table: after parsing is completed, a configuration file is generated and pushed to the input control pipeline to enter the match-action table stage, there to undergo a series of match+action tables. The tables are divided into two parts: "ingress pipeline" and "egress pipeline". The operation principles of the two parts are similar, both being capable of modifying the headers. The "match+action" operation of the ingress pipeline mainly determines the output port and the queue to which the data packet belongs. The processing results of the data packet are forwarding, recirculation, cloning, etc. The egress control pipeline is mainly applicable to modifying header fields, and modifying each header operation object separately, such as cloning a data packet during multicasting. After corresponding match-action, the data packet is forwarded according to the defined processing logic.

### 3. The data packet parsing process;

Continuing with FIG. 2, when a device receives a data packet, it first parses the Ethernet header of the data packet, and then reads the Ethernet type (ethertype) field in the Ethernet header:
if the value of the ethertype field is 0x8100, the next header is determined to be a Virtual Local Area Network (VLAN) header;
if the value of the ethertype field is 0x0800, the next header is determined to be an Internet Protocol version 4 (IPv4) header;
if the value of the ethertype field is 0x86dd, the next header is determined to be an Internet Protocol version 6 (IPv6) header;
if the value of the ethertype field is 0x0806, the next header is determined to be an Address Resolution Protocol (ARP) header;
when further parsing the VLAN header, the device reads its ethertype field:
   if the value of the ethertype field is 0x0800, the next header is determined to be an IPv4 header;
   if the value of the ethertype field is 0x86dd, the next header is determined to be an IPv6 header;
   if the value of the ethertype field is 0x0806, the next header is determined to be an ARP header;
   when further parsing the IPv4 header, the device reads its protocol field:
      if the value of the protocol field is 6, the next header is determined to be a TCP header;
      if the value of the protocol field is 17, the next header is determined to be a UDP header;
      when further parsing the IPv6 header, the device reads its protocol field:
         if the value of the protocol field is 6, the next header is determined to be a TCP header;
         if the value of the protocol field is 17, the next header is determined to be a UDP header;
         finally, if there are subsequent headers after the TCP or UDP header, they can be parsed layer by layer according to the above method, which will be omitted here.

An embodiment of the present disclosure provides a data packet processing method, apparatus, and electronic device, which can solve the problem of significant delay in the conventional data packet processing method. The method and the apparatus (or electronic device) are based on the same creative concept. Since the principles of solving problems by the method and the apparatus (or electronic device) are similar, for the implementations of one of the method and the apparatus (or electronic device), references may be made to the other of the method and the apparatus (or electronic device), and repeated contents will be omitted.

An embodiment of the present disclosure provides a data packet processing method performed by an electronic device. The electronic device can be any device that needs to forward data packets, such as a terminal, a network device, etc. The network device can be a base station, a User Plane Function (UPF) network element of a core network, a switch, a router, etc. In other words, the data packet processing method of the embodiment of the present disclosure is applicable to a terminal, or a base station, or a UPF network element, or a switch, or a router, etc.

The device involved in the embodiment of the present disclosure can be one that provides voice and/or data connectivity to a user, a handheld device with a wireless connection function, or other processing devices connected to a wireless modem. In different systems, the name of the terminal device may also be different. For example, in a 5G system, the terminal device can be called User Equipment (UE). A wireless terminal device can communicate with one or more core networks (CN) via a radio access network (RAN). The wireless terminal device can be a mobile terminal device, such as a mobile phone (a.k.a., a "cellular" phone) and a computer with a mobile terminal device. For example, it may be a portable, pocket-sized, handheld, computer-built-in, or vehicle-mounted mobile device that exchanges speech and/or data with the wireless access network. For example, Personal Communication Service (PCS) phones, cordless phones, Session Initiated Protocol (SIP) phones, Wireless Local Loop (WLL) stations, Personal Digital Assistants (PDAs), etc. Wireless terminal devices can also be referred to as systems, subscriber units, subscriber stations, mobile stations, mobiles, remote stations, access points, remote terminal devices, access terminal devices, user terminal devices, user agents, user devices, which will not be limited in the embodiments of the present disclosure.

The base station involved in the embodiment of the present disclosure can include multiple cells that provide services to the terminals. Depending on specific application occasions, a base station can also be called an access point, or a device in an access network that communicates with a wireless terminal device through one or more sectors over an air interface, or other names. A base station can be used to interchange received air frames with Internet Protocol (IP) packets, acting as a router between the wireless terminal device and the rest of the access network, where the rest of the access network can include an Internet Protocol (IP) communication network. The base station can also coordinate the management of air interface attributes. For example, the base station involved in the embodiment of the present disclosure can be a Base Transceiver Station (BTS) in Global System for Mobile Communications (GSM) or Code Division Multiple Access (CDMA), a NodeB in Wide-band Code Division Multiple Access (WCDMA), an evolved Node B (eNB or e-NodeB) in a Long Term Evolution (LTE) system, a 5G base station (gNB) in a next generation system (5G network architecture), a Home evolved Node B (HeNB), a relay node, a femto base station, a pico base station, etc., which will not be limited in the embodiments of the present disclosure. In some network structures, a base station can include a Centralized Unit (CU) node and a Distributed Unit (DU) node, and the centralized unit and the distributed unit can also be arranged geographically separately.

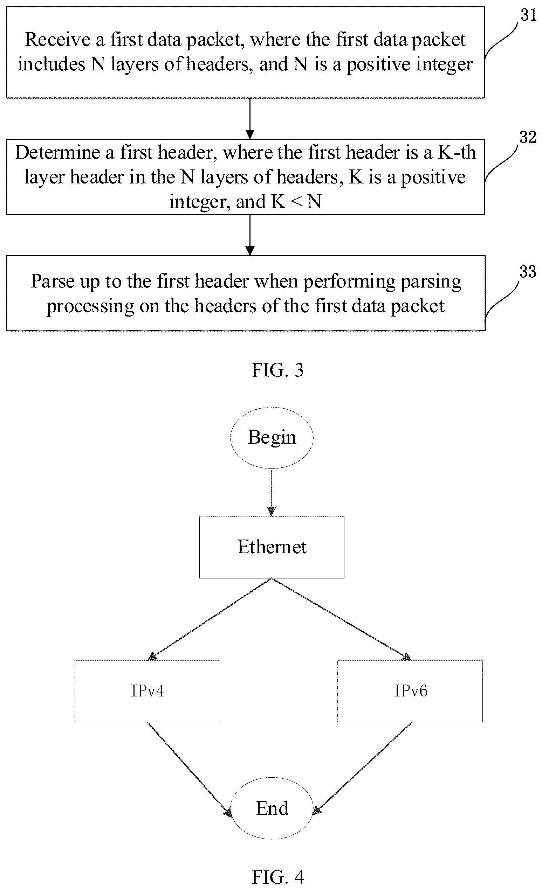

As shown in FIG. 3, a data packet processing method of the embodiment of the present disclosure includes the following steps 31 to 33.

Step 31: Receive a first data packet, where the first data packet includes N layers of headers, and N is a positive integer.

In some embodiments, the first data packet can be any data packet that needs to be forwarded. For example, the first data packet can be a data packet generated or received by a starting node of the data forwarding path, or the first data packet can be a data packet received by an intermediate node or a destination node of the data forwarding path, etc.

In some embodiments, the types of N layers of headers included in the first data packet include but are not limited to at least one of the following: Ethernet header, VLAN header, IP header (e.g., IPv4 header, IPv6 header, ARP header, etc.), TCP or UDP header, ICMP header, etc.

In some embodiments, the N layers of headers are defined by a protocol, or the N layers of headers are determined based on pre-configuration. For example: for an electronic device adopting a fixed protocol parsing mechanism, the N layers of headers can be defined by a protocol (such as the N layers of header structure shown in FIG. 2). Or, the electronic device may adopt a flexibly customizable parsing mechanism, and consequentially, the N layers of headers can be determined by pre-configuration (i.e., determined through pre-customization, including the number N of header layers, the types of each layer of the header, etc.).

Step 32: Determine a first header, where the first header is a K-th layer header in the N layers of headers, K is a positive integer, and K < N.

In some embodiments, the first header is a header to be modified, or the first header is a preset header up to which a pre-parsing is to be performed. For example: when the electronic device receives the first data packet that needs to be forwarded, the device can independently determine whether the header of the first data packet needs modification, and the header that actually needs to be modified, etc.

Step 33: Parse up to the first header when performing parsing processing on the headers of the first data packet.

In some embodiments, the parsing up to the first header when performing parsing processing on the headers of the first data packet can be understood to be: when performing parsing processing on the headers of the first data packet, the parsing will only go as far as the first header, leaving other headers in the first header un-parsed or un-processed. An example may be: only performing parsing processing on the foremost header in the N layers of headers, without performing parsing processing on other headers in the N layers of headers; or, only performing parsing processing on the first K layers of headers in the N layers of headers, not performing parsing processing on the remaining (N-K) layers of headers in the N layers of headers, etc.

In this embodiment, for the N layers of headers in the first data packet, when the electronic device performs header parsing processing, it only parses up to the header to be modified or the preset header up to which parsing is to be performed, and then modifies, or performs other actions on, the parsed headers, thereby avoiding layer-by-layer parsing processing and layer-by-layer encapsulation processing of the N layers of headers during data forwarding, and reducing the parsing delay and re-encapsulation delay of the data packet headers, hence reducing the overall processing delay of the data packet.

In some embodiments, the parsing up to the first header when performing parsing processing on the headers of the first data packet includes:
performing the following steps on first K layers of headers in the N layers of headers sequentially, starting from a first layer header of the N layers of headers:
determining a first field in an i-th layer header, where the first field is used for indicating an (i+1)-th layer header, i is a positive integer, and i ≤ K; and
performing parsing processing on the (i+1)-th layer header according to the first field.

In this embodiment, the first header may be a header to be modified. Or, the first header may be a preset header up to which a pre-parsing is to be performed. At this time, the first K layers of headers in the N layers of headers can be parsed layer by layer up to the first header. For example: the first field in the i-th layer header is used for indicating the (i+1)-th layer header. Through the first field, the (i+1)-th layer header can be determined, and further parsing processing can be performed on the (i+1)-th layer header, and so on until parsing up to the first header (i.e., the K-th layer header). The headers after the first header are not parsed, and at this time, the remaining part of the first header can be used as the payload of the data packet before moving on to performing subsequent processing, such as encapsulation or the like.

For example: in the case where the N layers of headers are defined by a protocol, that is, for a fixed protocol parsing mechanism, it is possible that only a given field of a fixed header need to be modified in some scenarios. Here, let the first header be the header to be modified, e.g., only the source and destination IP addresses of the data packet need to be modified: in this case, the protocol parsing mechanism may be customized so that the electronic device is set to only parse up to the IP header, leaving all headers after the IP header un-parsed. Further, all the remaining part of the IP header can be treated as the payload of the data packet.

The specific parsing mechanism is: the headers before the IP header can be parsed layer by layer. For example: if there is a VLAN header between the Ethernet header and the IP header, the Ethernet header can be parsed first, and the next layer header of the Ethernet header is determined through the ethertype field in the Ethernet header. If the next layer header of the Ethernet header is the VLAN header, the VLAN header is parsed and the next layer header of the VLAN header is determined through the ethertype field in the VLAN header. If the next layer header of the VLAN header is determined to be an IP header, the IP header is parsed, and all the subsequent headers are no longer parsed. If there is no VLAN header between the Ethernet header and the IP header, the Ethernet header can be parsed first, the next layer header of the Ethernet header is determined through the ethertype field in the Ethernet header. If the next layer header of the Ethernet header is determined to be an IP header, the IP header is parsed and the subsequent headers are no longer parsed. The specific parsing process is shown in FIG. 4:
when the first data packet is received, parse the Ethernet header of the first data packet first, and then read the ethertype field in the Ethernet header:
if the value of the ethertype field is 0x0800, the next header is determined to be an IPv4 header; and
if the value of the ethertype field is 0x86dd, the next header is determined to be an IPv6 header.

After parsing up to the IP layer, the subsequent headers will not be parsed, and the remaining headers and the payload will be stored integrally.

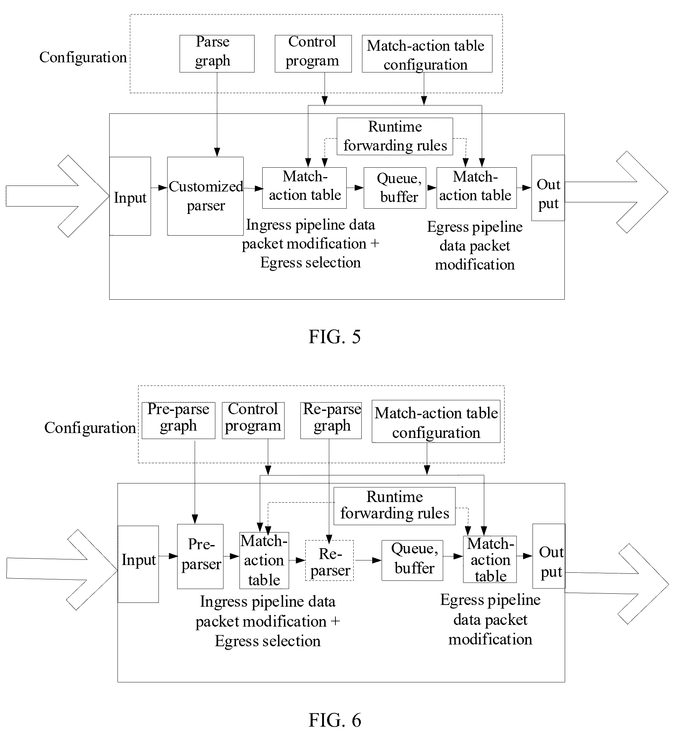

Another example: in a case where the N layers of headers are determined based on pre-configuration, that is, in a flexibly customized protocol parsing mechanism (for example, the parser part in the P4 operational processing mechanism is changed to a customized parser), a customized parser can be used for parsing in some specific scenarios. As shown in FIG. 5, a schematic diagram of a P4 programmable operational processing mechanism is given, where the input represents a data packet entering a device. The packet is then parsed according to the customized parser. After the parsing is completed, the control program is executed. After the matching is completed, the match-action table is executed, and the action defined in the control program is executed. Finally, the data packet is re-encapsulated and forwarded.

Specifically, the difference between the flexibly customized protocol parsing mechanism and the fixed protocol parsing mechanism is that one is a flexibly formulated parsing mechanism and the other is a fixed parsing mechanism. The specific way of parsing up to the first header is similar to the embodiment of the above fixed protocol parsing mechanism. For example, for the flexibly formulated parsing mechanism, taking the first header as a header to be modified, the way of parsing layer by layer up to the first header to be modified without parsing the headers after the first header is similar to the embodiment of the above fixed protocol parsing mechanism, and will be omitted here to avoid redundancy.

In some embodiments, the parsing up to the first header when performing parsing processing on the headers of the first data packet includes:
determining a second field in first (K-1) layers of headers in the N layers of headers, where the second field is used for indicating the first header; and
performing parsing processing on the first header according to the second field.

In this embodiment, the first header can be a header to be modified, or the first header can be a preset header up to which a pre-parsing is to be performed. At this time, the first (K-1) layers of headers in the N layers of headers can be parsed integrally, all the way until the first header. For example: a second field in the (K-1)-th layer header is used for indicating a K-th layer header. Through the second field, the K-th layer header can be determined, so that the parsing processing is only performed on the K-th layer header. The headers after the K-th layer header are not parsed. At this time, the remaining part of the first header can be used as the payload of the data packet, and then other processing such as subsequent encapsulation can be performed.

For example: in the case where the N layers of headers are defined by a protocol, that is, under a fixed protocol parsing mechanism, for some scenarios, may be only a given field of a fixed header need to be modified. For example, taking the first header as a header to be modified, where only the source and destination IP addresses of the data packet need to be modified: in this instance, the customized protocol parsing mechanism can be set such that the electronic device only parses up to the IP header, leaving the headers after the IP header not parsed. Further, the remaining part after the IP header can be treated as the payload of the data packet.

The specific parsing mechanism is: all headers before the IP header are parsed integrally. The method can be: reading the value of a fixed offset in all headers before the IP header at once, all the way until the field value indicating the layer where the IP header is located (i.e., reading a second field indicating the layer where the first header is located in all headers before the first header); and parsing the IP header when the header of a layer has been identified to be a IP header according to the field value. For example: if there is a VLAN header between the Ethernet header and the IP header, then the Ethernet header and the VLAN header can be taken as an integrated header, the reading may proceed until the field value indicating the IP header in this integrated header, and the parsing may proceed up to the IP header according to the IP header type determined by the field value, leaving un-parsed the subsequent headers.

Another example: in the case where the N layers of headers are determined based on pre-configuration, that is, under a flexibly customized protocol parsing mechanism (for example, modifying the parser part in the P4 operational processing mechanism to a customized parser), a customized parser can be used for parsing in some specific scenarios, and for the specific operational processing mechanism, one may continue referring to FIG. 5.

For a flexibly customized protocol parsing mechanism, e.g., let the first header be the one to be modified, and only the source and destination IP addresses of the data packet need to be modified. Then, the way of taking all headers before the IP header as an integral header and then parsing up to the IP header is similar to the embodiment of the above for the fixed protocol parsing mechanism, and will be omitted here to avoid redundancy.

The above takes the first header as a header to be modified as an example to illustrate the embodiment of parsing up to the first header when performing parsing processing on the headers of the first data packet. Specifically, in the case where the first header is a preset header up to which a pre-parsing is to be performed, the specific layer-by-layer parsing and integral parsing mechanisms are similar to those when the first header is a header to be modified. The difference is that in the case where the first header is a preset header up to which a pre-parsing is to be performed, then it is necessary to consider whether the header to be modified does exist in the first header that is pre-parsed to, then perform further processing based on the result of whether the header to be modified is actually in the first header that is pre-parsed to.

In some embodiments, after parsing up to the first header when performing parsing processing on the headers of the first data packet, the method further includes:
continuing to parse up to the second header when the second header is not included in parsed first K layers of headers in the N layers of headers, where the second header is the header to be modified.

In some embodiments, the step of continuing to parse up to the second header includes:
performing the following steps on last (N-K) layers of headers in the N layers of headers sequentially, starting from a (K+1)-th layer header of the N layers of headers:
determining a third field in a j-th layer header, where the third field is used for indicating the (j+1)-th layer header, j is a positive integer, and K+1 ≤ j ≤ N;
performing parsing processing on the (j+1)-th layer header according to the third field.

For example: in the case where the N layers of headers are defined by a protocol, that is, under a fixed protocol parsing mechanism, the device may, in some scenarios, customize a secondary parsing mechanism (i.e., a pre-parsing mechanism, that is, the first header is a preset header up to which a pre-parsing is to be performed). Illustratively, let the pre-parsing mechanism be parsing up to the IP header. Then, the customized pre-parsing mechanism may be set to let the electronic device to first parse up to the IP header, and then perform further processing based on the result of whether the header to be modified is indeed included in the IP header at the end of the pre-parsing up to the IP header.

The specific processing mechanism is: first parse up to the IP header based on the pre-parsing mechanism. When a match is made, and the source and destination IP addresses and other fields in the IP header do need to be modified, that is, the parsing of the IP header has been done during the pre-parsing process, then the headers after the IP header are no longer parsed. Then, re-encapsulation processing can be performed, and the re-encapsulated data packet may be forwarded. When the header to be modified has not been found after parsing up to the IP header (e.g., the header to be modified is in fact after the IP header), further parsing can be performed according to the field to be modified, i.e., a specific, on-demand parsing may be performed. For example, for a pre-parsing mechanism to parse up to the IP header, the embodiment of parsing one by one up to the first header can be adopted, which will be omitted here to avoid redundancy. In case the parsing needs to continue up to a second header to be parsed after the IP header, the way of parsing one by one up to the second header can also be adopted, which is similar to the embodiment of parsing one by one up to the first header, and will be omitted here to avoid redundancy.

Another example: in the case where the N layers of headers are determined based on pre-configuration, that is, under a flexibly customized protocol parsing mechanism (for example, the parser part in the P4 operational processing mechanism is modified as to, instead of following the processing mechanism of first perform layer-by-layer parsing, then matching, action execution, and layer-by-layer encapsulation, but rather, adopting the process of pre-parsing (for example, parsing only up to a certain data packet header), then matching, on-demand parsing, action execution, and encapsulation). A customized parser can be used for parsing in some specific scenarios. As shown in FIG. 6, a schematic diagram of a P4 programmable operational processing mechanism is presented. The input represents a data packet entering the device, where the data packet is then parsed according to the customized parser. After parsing is completed, the control program is executed. After matching is completed, if the pre-parser has parsed up to the header where the matching action table is executed, then the actions defined in the control program are executed. Instead, if the header where the matching action table is executed is not parsed, then re-parsing is needed, and the actions defined in the control program are executed, and finally the data packet is re-encapsulated and forwarded.

Specifically, for a flexibly customized parsing mechanism, e.g., a pre-parsing mechanism includes parsing up to the IP header: first, the pre-parser is used for parsing. If it is determined that the source and destination IP addresses and other fields in the IP header need to be modified after a completed matching, that is, it is determined that only parsing up to the IP header is needed, and if the IP header has indeed been parsed during the pre-parsing process, then the action after a completed matching is to modify the source and destination IPs in the IP header, and finally the action of re-encapsulating and forwarding the data packet is executed. If the part of the header to be modified is, however, not parsed, then further parsing can be performed according to the matching field up to the corresponding header to be modified , implementing a specific, on-demand parsing (e.g., adopting the way of parsing one by one from the first header after the pre-parsed header, until reaching the header to be modified, a process similar to the embodiment of parsing one by one up to the first header, which will be omitted here to avoid redundancy). Finally, in the encapsulation stage, the unparsed and unseparated part is re-encapsulated integrally and then forwarded.

In some embodiments, after parsing up to the first header when performing parsing processing on the headers of the first data packet, the method further includes:
continuing to parse up to the second header when the parsed first K layers of headers in the N layers of headers do not include the second header, where the second header is the header to be modified.

In some embodiments, the step of continuing to parse up to the second header includes:
determining a fourth field in last (N-K) layers of headers in the N layers of headers, where the fourth field is used for indicating the second header; and
performing parsing processing on the second header according to the fourth field.

For example: in the case where the N layers of headers are defined by a protocol, that is, under a fixed protocol parsing mechanism, then in some scenarios, the device can customize a secondary parsing mechanism (i.e., a pre-parsing mechanism, that is, the first header is a preset header up to which a pre-parsing is to be performed). Here, let the pre-parsing mechanism be parsing up to the IP header as an example: the pre-parsing mechanism may be set as such that the electronic device only parses up to the IP header, leaving any headers after the IP header unparsed. Further, the remaining part after the IP header can be regarded as the payload of the data packet.

The specific parsing mechanism is: all headers before the IP header are parsed as an integral header. The method may include reading a value of a fixed offset in all headers before the IP header together, directly reading the field value indicating the layer where the IP header is located, and parsing the IP header when the field value indicates that the layer is an IP header. When it is determined that the source and destination IP addresses and other fields in the IP header need to be modified after a completed matching, that is, it is determined that parsing only up to the IP header is needed, and if the IP header has indeed been parsed during the pre-parsing process, then the action following the completed matching is to modify the source and destination IPs in the IP header. Finally, the action of re-encapsulating and forwarding the data packet is executed. If the header to be modified is not an IP header (for example, it may be a header before or after the IP header), the integral parsing way can be further adopted to parse up to the actual header to be modified, without parsing other headers, and finally the data packet is re-encapsulated and forwarded.

It should be noted that the pre-parsing mechanism here can set a header having higher frequency or occurrence rate of modification based on actual needs. The headers parsed by the pre-parsing mechanism can be one or more. For example, when the integral parsing is adopted, it may be set to pre-parse to one or more headers to meet the parsing processing needs and reduce the delay in the parsing process, which is not limited in the embodiments of the present disclosure.

Another example: in the case where the N layers of headers are determined based on pre-configuration, that is, under a flexibly customized protocol parsing mechanism (for example, modifying the parser part in the P4 operational processing mechanism to no longer execute the processing mechanism following the process of first layer-by-layer parsing and then matching, action execution, and layer-by-layer encapsulation. Instead, the parser part may adopt the process of pre-parsing (for example, only parsing up to a certain data packet header) and then matching, on-demand parsing, action execution, and encapsulation). A customized parser can be used for parsing for some specific scenarios, and for the specific operational processing mechanism, reference can be made to FIG. 6.

For the flexibly customized protocol parsing mechanism, e.g., let the pre-parsing mechanism include parsing up to the IP header, then the implementation of taking all headers before the IP header as an integral header and then parsing up to the IP header is similar to the embodiment of the above fixed protocol parsing mechanism, and will be omitted here to avoid redundancy. Further, if it is determined that the source and destination IP addresses and other fields in the IP header need to be modified after a completed matching, that is, it is determined that only parsing up to the IP header is needed, and if the IP header has indeed been parsed during the pre-parsing process, then the action after the completed matching is to modify the source and destination IPs in the IP header. Finally, the action of re-encapsulating and forwarding the data packet is executed. If the header to be modified is not an IP header (for example, it may be a header before or after the IP header), then the integral parsing implementation can be further adopted to parse up to the header to be modified, without parsing other headers. Finally, the data packet is re-encapsulated and forwarded.

In some embodiments, the data packet processing method further includes:
receiving update information, where the update information is used for instructing updating of parsing configuration; and
updating a first parsing rule and/or a second parsing rule according to the update information; where the first parsing rule is a rule for performing parsing processing on the N layers of headers of the first data packet, and the second parsing rule is a rule for performing pre-parsing processing on first K layers of headers of the N layers of headers.

Specifically, the update information can be configured by a network device or a core network element, etc., which is not limited in the embodiment of the present disclosure.

For example: under the flexibly customized protocol parsing mechanism, when a specific scenario has changed, incurring the need to also change the customized parser, then the configuration of the parsing mechanism can be updated by pushing the update information. For example, in the embodiment of the above flexibly customized protocol parsing mechanism, the processing mechanism of parsing one by one or integrally up to the first header can be updated (i.e., the first parsing rule is updated). In this way, when a specific scenario has changed, the customized parsing rule can be updated without replacing the device.

Another example: under the flexibly customized protocol parsing mechanism, when the pre-parsing mechanism is adopted to parse up to the first header, and a specific scenario has changed and the customized parser needs to be changed, then the parsing rule and/or pre-parsing rule of the parser may need to be changed. For example, when a specific scenario has changed and the customized parser needs to be changed as well, then the configuration of the parsing mechanism can be updated by pushing the update information. For example, in the embodiment of the above flexibly customized protocol parsing mechanism, the processing mechanism of parsing one by one or integrally up to the first header (i.e., updating the first parsing rule) can be updated, and/or when a specific scenario has changed and the pre-parsing mechanism needs to be changed, the configuration of the pre-parsing mechanism can be updated by pushing the update information. For example, in the embodiment of the above flexibly customized protocol parsing mechanism, the pre-parsing mechanism of parsing one by one or integrally up to the first header can be updated (i.e., the first pre-parsing rule is updated). In this way, when a specific scenario undergoes change, the customized parsing rule and/or pre-parsing rule can be updated without replacing the device.

The data packet processing method in the embodiment of the present disclosure realizes the parsing optimization of data packet headers, which can reduce data packet parsing and encapsulation delays, thereby reducing data packet processing delays and improving data packet processing efficiency.

The above embodiments introduce the data packet processing method of the present disclosure. The following embodiments will further describe the corresponding apparatus and electronic device with reference to the accompanying drawings.

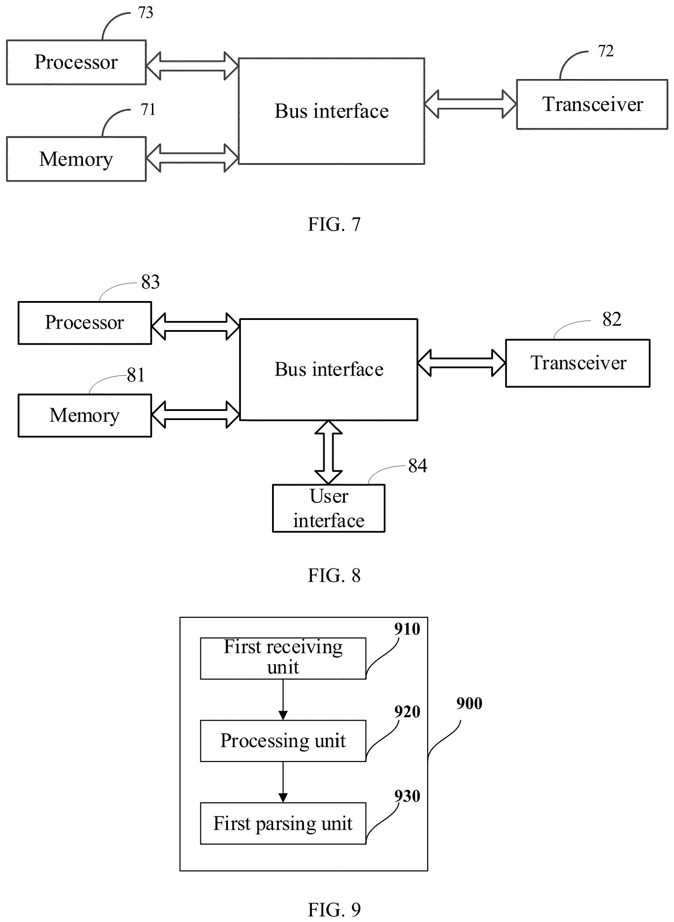

To better achieve the above objectives, as shown in FIG. 7, an embodiment of the present disclosure provides a data packet processing apparatus, applied to an electronic device. Such an electronic device may be, e.g., a network device, including a memory 71, a transceiver 72, and a processor 73, where the memory 71 is configured to store a computer program, the transceiver 72 is configured to send and receive data under the control of the processor 73. For example, the transceiver 72 may be configured to receive and send data under the control of the processor 73. The processor 73 is configured to read the computer program in the memory 71 and perform the following steps:
receiving a first data packet, where the first data packet includes N layers of headers, and N is a positive integer;
determining a first header, where the first header is the K-th layer header in the N layers of headers, K is a positive integer, and K < N; and
parsing up to the first header when performing parsing processing on headers of the first data packet.

In some embodiments, the first header is a header to be modified, or the first header is a preset header up to which a pre-parsing is to be performed.

In some embodiments, the N layers of headers are defined by a protocol, or the N layers of headers are determined based on pre-configuration.

In some embodiments, the processor 73 is configured to read the computer program in the memory 71 and perform the following step:
performing the following steps on first K layers of headers in the N layers of headers sequentially, starting from a first layer header of the N layers of headers:
determining a first field in an i-th layer header, where the first field is used for indicating an (i+1)-th layer header, i is a positive integer, and i ≤ K; and
performing parsing processing on the (i+1)-th layer header according to the first field.

In some embodiments, the processor 73 is configured to read the computer program in the memory 71 and perform the following steps:
determining a second field in first (K-1) layers of headers in the N layers of headers, where the second field is used for indicating the first header; and
performing parsing processing on the first header according to the second field.

In some embodiments, the processor 73 is configured to read the computer program in the memory 71 and perform the following step
continuing to parse up to the second header when the second header is not included in parsed first K layers of headers in the N layers of headers, where the second header is the header to be modified.

In some embodiments, the processor 73 is configured to read the computer program in the memory 71 and perform the following step:
performing the following steps on last (N-K) layers of headers in the N layers of headers sequentially, starting from a (K+1)-th layer header of the N layers of headers:
determining a third field in a j-th layer header, where the third field is used for indicating a (j+1)-th layer header, j is a positive integer, and K+1 ≤ j ≤ N; and
performing parsing processing on the (j+1)-th layer header according to the third field.

In some embodiments, the processor 73 is configured to read the computer program in the memory 71 and perform the following steps:
determining a fourth field in last (N-K) layers of headers in the N layers of headers, where the fourth field is used for indicating the second header; and
performing parsing processing on the second header according to the fourth field.

In some embodiments, the processor 73 is configured to read the computer program in the memory 71 and perform the following steps:
receiving update information, where the update information is used for instructing updating of parsing configuration; and
updating a first parsing rule and/or a second parsing rule according to the update information, where the first parsing rule is a rule for performing parsing processing on the N layers of headers of the first data packet, and the second parsing rule is a rule for performing pre-parsing processing on first K layers of headers of the N layers of headers.

In FIG. 7, a bus architecture can include any number of interconnected buses and bridges, specifically linking various circuits of one or more processors represented by the processor 73 and a memory represented by the memory 71. The bus architecture can also link various other circuits such as peripheral devices, voltage regulators, and power management circuits, which are well-known in the art and therefore will not be further described herein. The bus interface provides an interface. The transceiver 72 can be multiple elements, i.e., including a transmitter and a receiver, providing a unit for communicating with various other devices over transmission media including wireless channels, wired channels, optical cables, etc. The processor 73 is responsible for managing the bus architecture and general processing, and the memory 71 can store data used by the processor 73 when performing operations.

The processor 73 can be a Central Processing Unit (CPU), an Application Specific Integrated Circuit (ASIC), a Field-Programmable Gate Array (FPGA), or a Complex Programmable Logic Device (CPLD), and the processor can also adopt a multi-core architecture.

It should be noted here that the above apparatus provided by the embodiment of the present disclosure can implement all the method steps implemented by the above data packet processing method embodiment and achieve the same technical effects. Here, the parts and beneficial effects that are the same as those in the method embodiment will not be specifically described again in this embodiment.

As shown in FIG. 8, this embodiment provides a data packet processing apparatus, applied to an electronic device (e.g., the electronic device may be a terminal), including a memory 81, a transceiver 82, and a processor 83, where the memory 81 is configured to store a computer program, the transceiver 82 is configured to send and receive data under the control of the processor 83. For example, the transceiver 82 may be configured to receive and send data under the control of the processor 83. The processor 83 is configured to read the computer program in the memory 81 and perform the following steps:
receiving a first data packet, where the first data packet includes N layers of headers, and N is a positive integer;
determining a first header, where the first header is a K-th layer header in the N layers of headers, K is a positive integer, and K < N; and
parsing up to the first header when performing parsing processing on the headers of the first data packet.

In some embodiments, the first header is a header to be modified, or the first header is a preset header up to which a pre-parsing is to be performed.

In some embodiments, the N layers of headers are defined by a protocol, or the N layers of headers are determined based on pre-configuration.

In some embodiments, the processor 83 is configured to read the computer program in the memory 81 and perform the following step:
performing the following steps on first K layers of headers in the N layers of headers sequentially, starting from a first layer header of the N layers of headers:
determining a first field in an i-th layer header, where the first field is used for indicating an (i+1)-th layer header, i is a positive integer, and i ≤ K; and
performing parsing processing on the (i+1)-th layer header according to the first field.

In some embodiments, the processor 83 is configured to read the computer program in the memory 81 and perform the following steps:
determining a second field in a first (K-1) layers of headers in the N layers of headers, where the second field is used for indicating the first header; and
performing parsing processing on the first header according to the second field.

In some embodiments, the processor 83 is configured to read the computer program in the memory 81 and perform the following step:
continuing to parse up to a second header when the second header is not included in parsed first K layers of headers in the N layers of headers, where the second header is a header to be modified.

In some embodiments, the processor 83 is configured to read the computer program in the memory 81 and perform the following step:
performing the following steps on last (N-K) layers of headers in the N layers of headers sequentially, starting from a (K+1)-th layer header of the N layers of headers:
determining a third field in a j-th layer header, where the third field is used for indicating a (j+1)-th layer header, j is a positive integer, and K+1 ≤ j ≤ N; and
performing parsing processing on the (j+1)-th layer header according to the third field.

In some embodiments, the processor 83 is configured to read the computer program in the memory 81 and perform the following steps:
determining a fourth field in last (N-K) layers of headers in the N layers of headers, where the fourth field is used for indicating the second header; and
performing parsing processing on the second header according to the fourth field.

In some embodiments, the processor 83 is configured to read the computer program in the memory 81 and perform the following steps:
receiving update information, where the update information is used for instructing updating of parsing configuration; and
updating a first parsing rule and/or a second parsing rule according to the update information, where the first parsing rule is a rule for performing parsing processing on the N layers of headers of the first data packet, and the second parsing rule is a rule for performing pre-parsing processing on first K layers of headers of the N layers of headers.

In FIG. 8, a bus architecture can include any number of interconnected buses and bridges, specifically linking various circuits of one or more processors represented by the processor 83 and a memory represented by the memory 81. The bus architecture can also link various other circuits such as peripheral devices, voltage regulators, and power management circuits, which are well-known in the art and therefore will not be further described herein. The bus interface provides an interface. The transceiver 82 can be multiple elements, i.e., including a transmitter and a receiver, providing a unit for communicating with various other devices over transmission media including wireless channels, wired channels, optical cables, etc. For different user devices, the user interface 84 can also be an interface capable of connecting required external and internal devices, and the connected devices include but are not limited to a keypad, a display, a speaker, a microphone, a joystick, etc.

The processor 83 is responsible for managing the bus architecture and typical processing works, and the memory 81 can store data used by the processor 83 when performing operations.

In some embodiments, the processor 83 can be a CPU, an ASIC, an FPGA, or a CPLD, and the processor can also adopt a multi-core architecture.

The processor executes any of the methods provided by the embodiments of the present disclosure by calling the computer program stored in the memory for executing the obtained executable instructions. The processor and the memory can also be physically arranged separately.

It should be noted here that the above apparatus provided by the embodiment of the present disclosure can implement all the method steps implemented by the above data packet processing method embodiment and achieve the same technical effects. Here, the parts and beneficial effects that are the same as those in the method embodiment will not be specifically described again in this embodiment.

As shown in FIG. 9, an embodiment of the present disclosure further provides an electronic device 900, including:
a first receiving unit 910, configured to receive a first data packet, where the first data packet includes N layers of headers, and N is a positive integer;
a processing unit 920, configured to determine a first header, where the first header is a K-th layer header in the N layers of headers, K is a positive integer, and K < N; and
a first parsing unit 930, configured to parse up to the first header when performing parsing processing on the headers of the first data packet.

In some embodiments, the first header is a header to be modified, or the first header is a preset header up to which a pre-parsing is to be performed.

In some embodiments, the N layers of headers are defined by a protocol, or the N layers of headers are determined based on pre-configuration.

In some embodiments, the first parsing unit 930 is further configured to:
perform the following steps on first K layers of headers in the N layers of headers sequentially, starting from a first layer header of the N layers of headers:
determining a first field in an i-th layer header, where the first field is used for indicating an (i+1)-th layer header, i is a positive integer, and i ≤ K; and
performing parsing processing on the (i+1)-th layer header according to the first field.

In some embodiments, the first parsing unit 930 is further configured to:
determine a second field in first (K-1) layers of headers in the N layers of headers, where the second field is used for indicating the first header; and
perform parsing processing on the first header according to the second field.

In some embodiments, the electronic device 900 further includes:
a second parsing unit, configured to continue to parse up to a second header when the second header is not included in the parsed first K layers of headers in the N layers of headers, where the second header is the header to be modified.

In some embodiments, the second parsing unit is further configured to:
perform the following steps on last (N-K) layers of headers in the N layers of headers sequentially, starting from a (K+1)-th layer header of the N layers of headers:
determining a third field in a j-th layer header, where the third field is used for indicating a (j+1)-th layer header, j is a positive integer, and K+1 ≤ j ≤ N;
performing parsing processing on the (j+1)-th layer header according to the third field.

In some embodiments, the second parsing unit is further configured to:
determine a fourth field in last (N-K) layers of headers in the N layers of headers, where the fourth field is used for indicating the second header; and
perform parsing processing on the second header according to the fourth field.

In some embodiments, the electronic device 900 further includes:
a second receiving unit, configured to receive update information, where the update information is used for instructing updating of parsing configuration; and
an updating unit, configured to update a first parsing rule and/or a second parsing rule according to the update information, where the first parsing rule is a rule for performing parsing processing on the N layers of headers of the first data packet, and the second parsing rule is a rule for performing pre-parsing processing on first K layers of headers of the N layers of headers.

It should be noted that the division of units in the embodiment of the present disclosure is schematic, and is only a logical function division, and there may be other division manners in actual implementations. In addition, various functional units in an embodiment of the present disclosure can be integrated into one processing unit. Various units can exist physically separated, or two or more units can be integrated into one unit. The integrated unit can be implemented in the form of hardware, or in the form of software functional units.

When an integrated unit is implemented in the form of a software functional unit and sold or used as an independent product, it can be stored in a processor-readable storage medium. Based on this understanding, the essence of the technical solution of the present disclosure essentially, or the part the technical solution contributing to the related art, or all or part of the technical solution can be embodied in the form of a software product. The computer software product is stored in a storage medium, and includes several instructions to enable a computing device (which can be a personal computer, a server, or a network device, etc.) or a processor to execute all or part of the steps of the method described in each embodiment of the present disclosure. The aforementioned storage medium may include: a USB flash drive, a removable hard disk, a Read-Only Memory (ROM), a Random Access Memory (RAM), a magnetic disk, or an optical disc, and other media that can store program codes.

It should be noted here that the above electronic device provided by the embodiment of the present disclosure can implement all the method steps implemented by the above data packet processing method embodiment and achieve the same technical effects. Here, the parts and beneficial effects that are the same as those in the method embodiment will not be specifically described again in this embodiment.

An embodiment of the present disclosure further provides a processor-readable storage medium, where the processor-readable storage medium stores a computer program, and the computer program is configured to cause the processor to execute the steps of the above data packet processing method, and can achieve the same technical effects, and the parts and beneficial effects that are the same as those in the method embodiment will not be specifically described again in this embodiment.

The processor-readable storage medium can be any available medium or data storage device that can be accessed by a processor, including but not limited to magnetic memory (such as a floppy disk, a hard disk, a magnetic tape, a Magneto-Optical Disk (MO), etc.), optical memory (such as a Compact Disk (CD), a Digital Versatile Disc (DVD), a Blu-ray Disc (BD), a High-Definition Versatile Disc (HVD), etc.), and semiconductor memory (such as a Read-Only Memory (ROM), an Erasable Programmable ROM (EPROM), an Electrically EPROM (EEPROM), a NAND FLASH, a Solid State Disk or Solid State Drive (SSD))).

Those skilled in the art should understand that the embodiments of the present disclosure can be provided as a method, a system, or a computer program product. Therefore, the present disclosure can adopt the form of a hardware-only embodiment, a software-only embodiment, or an embodiment combining software and hardware. Moreover, the present disclosure can adopt the form of a computer program product implemented on one or more computer-usable storage media (including but not limited to disk memory and optical memory, etc.) containing computer-usable program codes.

The present disclosure is described with reference to flowcharts and/or block diagrams of methods, devices (systems), and computer program products according to the embodiments of the present disclosure. It should be understood that each step and/or block in the flowcharts and/or block diagrams, and combinations of steps and/or blocks in the flowcharts and/or block diagrams can be implemented by computer-executable instructions. These computer-executable instructions can be provided to a processor of a general-purpose computer, a special-purpose computer, an embedded processor, or other programmable data processing devices to create a machine, so that the instructions executed by the processor of the computer or other programmable data processing devices may create a device for realizing the functions specified in one or more steps in the flowcharts and/or one or more blocks in the block diagrams.

These processor-executable instructions can also be stored in a processor-readable memory that can guide a computer or other programmable data processing devices to operate in a specific manner, so that the instructions stored in the processor-readable memory generate an article of manufacture including an instruction device, where the instruction device realizes the functions specified in one flow or multiple flows in the flowcharts and/or one block or multiple blocks in the block diagrams.

These processor-executable instructions can also be loaded onto a computer or other programmable data processing devices, so that a series of operation steps are executed on the computer or other programmable devices to generate computer-implemented processing, so that the instructions executed on the computer or other programmable devices provide steps for realizing the functions specified in one or more steps in the flowcharts and/or one block or multiple blocks in the block diagrams.

In addition, it should be pointed out that in the apparatus and method of the present disclosure, obviously, each component or each step can be decomposed and/or recombined. These decompositions and/or re-combinations should be regarded as equivalent solutions of the present disclosure. Moreover, the steps of executing the above series of processes can naturally be executed in chronological order according to the described order, but do not necessarily need to be executed in chronological order. Some steps can be executed in parallel or independently

In addition, it should be pointed out that in the apparatus and method of the present disclosure, obviously, each component or each step can be decomposed and/or recombined. These decompositions and/or re-combinations shall be regarded as equivalent solutions of the present disclosure. Moreover, the steps of executing the above series of processes can naturally be executed in chronological order according to the described sequence, but they do not necessarily have to be executed in chronological order; some steps can be executed in parallel or independently of each other. For those of ordinary skill in the art, it is understandable that all or any steps or components of the method and apparatus of the present disclosure can be implemented in hardware, firmware, software, or a combination thereof on any computing device (including a processor, a storage medium, etc.) or a network of computing devices. This can be achieved by those of ordinary skill in the art using their basic programming skills after reading the description of the present disclosure.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code which is called and executed by a certain processing element of the above device to perform the functions of the determination module. Other modules have similar implementations. In addition, all or part of these modules may be integrated together, and may be implemented independently. The processing element mentioned here may be an integrated circuit with signal processing capability. In the implementation process, the various steps of the above method or the above various modules may be implemented by an integrated logic circuit in hardware form in elements of a processor or instructions in the form of software.

For example, the various modules, units, subunits or submodules may be one or more integrated circuits configured to implement the above methods, such as one or more application specific integrated circuits (ASIC), or one or more microprocessors (digital signal processor, DSP), or one or more field programmable gate arrays (FPGA). As another example, when a module described above is implemented in the form of program codes called by a processing element, the processing element may be a general purpose processor, such as a central processing unit (CPU) or other processors that may call program codes. As another example, these modules may be integrated together and implemented as a system-on-a-chip (SOC).

Terms such as "first" and "second" in the specification and the claims of the present disclosure are used for distinguishing similar objects and are not necessarily used for describing a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent in the process, method, product, or device. Moreover, the term "and/or" used in the specification and the claims indicates at least one of connected objects, for example, A and/or B and/or C means 7 situations including: A alone, B alone, C alone, both A and B, both B and C, both A and C, and all of A, B and C. Similarly, the use of "at least one of A and B" in this specification and claims should be understood as "A alone, B alone, or both A and B".

Apparently, a person of ordinary skills in the art can make various modifications and variations to the present disclosure without departing from the spirit and scope of the present disclosure. In this way, if these modifications and variations of the present disclosure fall within the scope of the claims and their equivalent technologies, the present disclosure also intends to include these modifications and variations.

## Claims

1. A data packet processing method, performed by an electronic device, comprising:
receiving a first data packet, wherein the first data packet comprises N layers of headers, and N is a positive integer;
determining a first header, wherein the first header is a K-th layer header in the N layers of headers, K is a positive integer, and K < N; and
parsing up to the first header when performing parsing processing on the headers of the first data packet.

2. The data packet processing method according to claim 1, wherein the first header is a header to be modified, or the first header is a preset header up to which a pre-parsing is to be performed.

3. The data packet processing method according to claim 1, wherein the N layers of headers are defined by a protocol, or the N layers of headers are determined based on pre-configuration.

4. The data packet processing method according to any one of claims 1 to 3, wherein the parsing up to the first header when performing parsing processing on the headers of the first data packet comprises:
performing the following steps on first K layers of headers in the N layers of headers sequentially, starting from a first layer header of the N layers of headers:
determining a first field in an i-th layer header, wherein the first field is used for indicating an (i+1)-th layer header, i is a positive integer, and i ≤ K; and
performing parsing processing on the (i+1)-th layer header according to the first field.

5. The data packet processing method according to any one of claims 1 to 3, wherein the parsing up to the first header when performing parsing processing on the headers of the first data packet comprises:
determining a second field in first (K-1) layers of headers in the N layers of headers, wherein the second field is used for indicating the first header; and
performing parsing processing on the first header according to the second field.

6. The data packet processing method according to claim 2, wherein after parsing up to the first header when performing parsing processing on the headers of the first data packet, the method further comprises:
continuing to parse up to a second header when the second header is not comprised in parsed first K layers of headers in the N layers of headers, wherein the second header is a header to be modified.

7. The data packet processing method according to claim 6, wherein the continuing to parse up to a second header comprises:
performing the following steps on last (N-K) layers of headers in the N layers of headers sequentially, starting from a (K+1)-th layer header of the N layers of headers:
determining a third field in a j-th layer header, wherein the third field is used for indicating a (j+1)-th layer header, j is a positive integer, and K+1 ≤ j ≤ N; and
performing parsing processing on the (j+1)-th layer header according to the third field.

8. The data packet processing method according to claim 6, wherein the continuing to parse up to a second header comprises:
determining a fourth field in last (N-K) layers of headers in the N layers of headers, wherein the fourth field is used for indicating the second header; and
performing parsing processing on the second header according to the fourth field.

9. The data packet processing method according to claim 2 or 3, further comprising:
receiving update information, wherein the update information is used for instructing updating of parsing configuration; and
updating a first parsing rule and/or a second parsing rule according to the update information; wherein the first parsing rule is a rule for performing parsing processing on the N layers of headers of the first data packet, and the second parsing rule is a rule for performing pre-parsing processing on first K layers of headers of the N layers of headers.

10. A data packet processing apparatus, comprising a memory, a transceiver, and a processor,
wherein the memory is configured to store a computer program, the transceiver is configured to send and receive data under the control of the processor, and the processor is configured to read the computer program in the memory and perform the following steps:
receiving a first data packet, wherein the first data packet comprises N layers of headers, and N is a positive integer;
determining a first header, wherein the first header is a K-th layer header in the N layers of headers, K is a positive integer, and K < N; and
parsing up to the first header when performing parsing processing on the headers of the first data packet.

11. The data packet processing apparatus according to claim 10, wherein the first header is a header to be modified, or the first header is a preset header up to which a pre-parsing is to be performed.

12. The data packet processing apparatus according to claim 10, wherein the N layers of headers are defined by a protocol, or the N layers of headers are determined based on pre-configuration.

13. The data packet processing apparatus according to any one of claims 10 to 12, wherein the processor is configured to read the computer program in the memory and perform the following step:
performing the following steps on first K layers of headers in the N layers of headers sequentially, starting from a first layer header of the N layers of headers:
determining a first field in an i-th layer header, wherein the first field is used for indicating an (i+1)-th layer header, i is a positive integer, and i ≤ K; and
performing parsing processing on the (i+1)-th layer header according to the first field.

14. The data packet processing apparatus according to any one of claims 10 to 12, wherein the processor is configured to read the computer program in the memory and perform the following steps:
determining a second field in first (K-1) layers of headers in the N layers of headers, wherein the second field is used for indicating the first header; and
performing parsing processing on the first header according to the second field.

15. The data packet processing apparatus according to claim 11, wherein the processor is configured to read the computer program in the memory and perform the following step:
continuing to parse up to a second header when the second header is not comprised in parsed first K layers of headers in the N layers of headers, wherein the second header is a header to be modified.

16. The data packet processing apparatus according to claim 15, wherein the processor is configured to read the computer program in the memory and perform the following step:
performing the following steps on last (N-K) layers of headers in the N layers of headers sequentially, starting from a (K+1)-th layer header of the N layers of headers:
determining a third field in a j-th layer header, wherein the third field is used for indicating a (j+1)-th layer header, j is a positive integer, and K+1 ≤ j ≤ N; and
performing parsing processing on the (j+1)-th layer header according to the third field.

17. The data packet processing apparatus according to claim 15, wherein the processor is configured to read the computer program in the memory and perform the following steps:
determining a fourth field in last (N-K) layers of headers in the N layers of headers, wherein the fourth field is used for indicating the second header; and
performing parsing processing on the second header according to the fourth field.

18. The data packet processing apparatus according to claim 11 or 12, wherein the processor is configured to read the computer program in the memory and perform the following steps:
receiving update information, wherein the update information is used for instructing updating of parsing configuration; and
updating a first parsing rule and/or a second parsing rule according to the update information, wherein the first parsing rule is a rule for performing parsing processing on the N layers of headers of the first data packet, and the second parsing rule is a rule for performing pre-parsing processing on first K layers of headers of the N layers of headers.

19. An electronic device, comprising:
a first receiving unit, configured to receive a first data packet, wherein the first data packet comprises N layers of headers, and N is a positive integer;
a processing unit, configured to determine a first header, wherein the first header is a K-th layer header in the N layers of headers, K is a positive integer, and K < N; and
a first parsing unit, configured to parse up to the first header when performing parsing processing on headers of the first data packet.

20. The electronic device according to claim 19, wherein the first header is a header to be modified, or the first header is a preset header up to which a pre-parsing is to be performed.

21. The electronic device according to claim 19, wherein the N layers of headers are defined by a protocol, or the N layers of headers are determined based on pre-configuration.

22. The electronic device according to any one of claims 19 to 21, wherein the first parsing unit is further configured to:
perform the following steps on first K layers of headers in the N layers of headers sequentially, starting from a first layer header of the N layers of headers:
determining a first field in an i-th layer header, wherein the first field is used for indicating an (i+1)-th layer header, i is a positive integer, and i ≤ K; and
performing parsing processing on the (i+1)-th layer header according to the first field.

23. The electronic device according to any one of claims 19 to 21, wherein the first parsing unit is further configured to:
determine a second field in first (K-1) layers of headers in the N layers of headers, wherein the second field is used for indicating the first header; and
perform parsing processing on the first header according to the second field.

24. The electronic device according to claim 20, further comprising:
a second parsing unit, configured to continue to parse up to a second header when the second header is not comprised in parsed first K layers of headers in the N layers of headers, wherein the second header is a header to be modified.

25. The electronic device according to claim 24, wherein the second parsing unit is further configured to:
perform the following steps on last (N-K) layers of headers in the N layers of headers sequentially, starting from a (K+1)-th layer header of the N layers of headers:
determining a third field in a j-th layer header, wherein the third field is used for indicating a (j+1)-th layer header, j is a positive integer, and K+1 ≤ j ≤ N; and
performing parsing processing on the (j+1)-th layer header according to the third field.

26. The electronic device according to claim 24, wherein the second parsing unit is further configured to:
determine a fourth field in last (N-K) layers of headers in the N layers of headers, wherein the fourth field is used for indicating the second header; and
perform parsing processing on the second header according to the fourth field.

27. The electronic device according to claim 20 or 21, further comprising:
a second receiving unit, configured to receive update information, wherein the update information is used for instructing updating of parsing configuration; and
an updating unit, configured to update a first parsing rule and/or a second parsing rule according to the update information; wherein the first parsing rule is a rule for performing parsing processing on the N layers of headers of the first data packet, and the second parsing rule is a rule for performing pre-parsing processing on first K layers of headers of the N layers of headers.

28. A processor-readable storage medium, wherein the processor-readable storage medium stores a computer program, and the computer program is configured to cause a processor to execute the steps of the data packet processing method according to any one of claims 1 to 9.
